# EUROPÄISCHE PATENTSCHRIFT

(11) **EP 4 003 794 B1**
(45) Veröffentlichungstag und Bekanntmachung des Hinweises auf die Patenterteilung: **30.08.2023**
(21) Anmeldenummer: 19746059.5
(22) Anmeldetag: 23.07.2019
(51) Int. Cl.: B60S 3/04

(54) **PORTALVORRICHTUNG FÜR EINE FAHRZEUGBEHANDLUNGSANLAGE UND FAHRZEUGBEHANDLUNGSANLAGE**
GANTRY DEVICE FOR A VEHICLE TREATMENT SYSTEM, AND VEHICLE TREATMENT SYSTEM
DISPOSITIF DE PORTIQUE POUR UNE INSTALLATION DE MANUTENTION DE VÉHICULES ET INSTALLATION DE MANUTENTION DE VÉHICULES

(43) Veröffentlichungstag der Anmeldung: 01.06.2022
(73) Patentinhaber: Alfred Kärcher SE & Co. KG, 71364 Winnenden (DE)
(72) Erfinder: HEINZE, Michael, 71282 Hemmingen (DE); KNISEL, Bernd, 71229 Leonberg (DE)
(74) Vertreter: DTS Patent- und Rechtsanwälte Schnekenbühl und Partner mbB
(86) Internationale Anmeldenummer: PCT/EP2019/069775
(87) Internationale Veröffentlichungsnummer: WO 2021/013339

(56) Entgegenhaltungen:
- EP-A1- 3 173 301
- WO-A1-2008/031674
- DE-A1-102004 053 357

## Beschreibung

Die vorliegende Erfindung betrifft eine Portalvorrichtung für eine Fahrzeugbehandlungsanlage, umfassend zwei Stützeinrichtungen, die in einem Abstand zueinander angeordnet sind, und eine die Stützeinrichtungen miteinander verbindende Querträgereinrichtung, wobei die Stützeinrichtungen über einen jeweiligen Aufstellbereich auf einer Aufstellfläche für die Portalvorrichtung aufstellbar sind und mit der Querträgereinrichtung an einem dem Aufstellbereich abgewandten Verbindungsbereich verbunden sind.

Eine derartige Portalvorrichtung kann zum Beispiel bei einer Fahrzeugwaschanlage zum Einsatz kommen. Hierbei kann es sich um eine Portalwaschanlage handeln, deren Portalvorrichtung während der Reinigung relativ zu einem stationären Fahrzeug auf der Aufstellfläche verfahren kann. Alternativ kann die Fahrzeugwaschanlage als Waschstraße ausgestaltet sein, bei der die Portalvorrichtung insbesondere mit einem daran angeordneten Reinigungsaggregat stationär ist und das Fahrzeug mittels einer Fördereinrichtung relativ zur Portalvorrichtung bewegt wird.

Die EP 3 173 301 B1 beschreibt ein System zur sicheren Montage einer Waschvorrichtung für Fahrzeuge.

Die DE 10 2004 053357 A1 offenbart eine gattungsgemäße Portalvorrichtung.

Aufgabe der vorliegenden Erfindung ist es, eine gattungsgemäße Portalvorrichtung bereitzustellen, die sich auf einfachere Weise montieren und raumsparend transportieren lässt.

Diese Aufgabe wird durch den Gegenstand des unabhängigen Anspruchs 1 gelöst.

Bei der erfindungsgemäßen Portalvorrichtung kann mindestens eine der Stützeinrichtungen und damit die Portalvorrichtung insgesamt einen Transportzustand und einen Aufbauzustand einnehmen. Im Transportzustand können der erste und der zweite Abschnitt der mindestens einen Stützeinrichtung relativ zueinander vorzugsweise eine abgewinkelte und gewissermaßen "eingeklappte" Stellung einnehmen, wobei der zweite Abschnitt in Richtung der anderen Stützeinrichtung verschwenkt ist. Auf diese Weise kann die Portalvorrichtung im Transportzustand raumsparend transportiert werden. Ausgehend vom Transportzustand kann die Stützeinrichtung durch Verschwenken des zweiten Abschnittes um die Schwenkachse relativ zum ersten Abschnitt in einen Aufbauzustand überführt werden. Die mindestens eine Stützeinrichtung kann an der Querträgereinrichtung zum Beispiel werksseitig vormontiert sein. Dabei ist die mindestens eine Stützeinrichtung über den Verbindungsbereich am ersten Abschnitt an der Querträgereinrichtung festgelegt.

Am Aufstellort wird der Montageaufwand erheblich reduziert. Vorzugsweise kann vorgesehen sein, dass die Portaleinrichtung über die Querträgereinrichtung angehoben wird, zum Beispiel mittels eines Gabelstaplers oder einer andersartigen Hubeinrichtung. Durch Verschwenken des zweiten Abschnittes relativ zum ersten Abschnitt wird die Portalvorrichtung in den Aufbauzustand überführt. Die Portalvorrichtung kann auf die Aufstellfläche abgesenkt werden, bis sie über die Aufstellbereiche auf der Aufstellfläche aufsteht.

Der Aufstellbereich ist vorzugsweise an einem der Querträgereinrichtung abgewandten Endseite der Stützeinrichtungen angeordnet.

Vorteilhafterweise ist der Verbindungsbereich an einer Endseite der Stützeinrichtung angeordnet, die der Querträgereinrichtung zugewandt ist.

Vorteilhaft ist es, wenn mindestens eine der Stützeinrichtungen am Verbindungsbereich unbeweglich mit der Querträgereinrichtung verbunden ist. Insbesondere ist der erste Abschnitt der mindestens einen Stützeinrichtung mit Gelenkeinrichtung unbeweglich an der Querträgereinrichtung festgelegt.

Die mindestens eine Stützeinrichtung ist im Aufbauzustand vorteilhafterweise geradlinig erstreckt ausgebildet. Dabei können insbesondere der erste Abschnitt und der zweite Abschnitt miteinander fluchten.

Von Vorteil ist es, wenn mindestens ein Anschlagelement vorgesehen ist, das den Umfang der Verschwenkung der Abschnitte relativ zueinander verschwenkt, so dass die Abschnitte eine eindeutige Relativposition einnehmen, wenn sie den Aufbauzustand einnehmen.

Günstigerweise ist eine Arretierungseinrichtung vorgesehen, über die die Abschnitte im Aufbauzustand relativ zueinander arretiert sind.

Als vorteilhaft erweist es sich, wenn ein Schwenkwinkel zwischen dem ersten Abschnitt und dem zweiten Abschnitt 90° oder im Wesentlichen 90° beträgt. Beispielsweise können die Abschnitte im Transportzustand rechtwinklig oder im Wesentlichen rechtwinklig zueinander ausgerichtet sein und nach dem Überführen in den Aufbauzustand miteinander fluchten, so dass die Stützeinrichtung geradlinig erstreckt ist.

Die Schwenkachse ist vorzugsweise quer und insbesondere senkrecht zur Erstreckungsrichtung der mindestens einen Stützeinrichtung in deren Aufbauzustand ausgerichtet.

Die Schwenkachse ist vorzugsweise quer und insbesondere senkrecht zu einer Erstreckungsrichtung der Querträgereinrichtung ausgerichtet. Da die Schwenkachse im Abstand zur Querträgereinrichtung angeordnet ist, kann hierunter vorliegend insbesondere verstanden werden, dass eine Ebene, die von der Schwenkachse quer und insbesondere senkrecht durchstoßen wird, zumindest einen Träger der Querträgereinrichtung enthält.

Als vorteilhaft erweist es sich, wenn der zweite Abschnitt im Transportzustand parallel zur Querträgereinrichtung ausgerichtet ist.

Günstig ist es, wenn die Schwenkachse derart angeordnet ist, dass der zweite Abschnitt im Transportzustand bis zur anderen Stützeinrichtung oder nahe an die andere Stützeinrichtung ragt. Beispielsweise kann ein kompakter Transportzustand vorgesehen sein, bei dem die Gelenkeinrichtung mit der Schwenkachse derart positioniert ist, dass der zweite Abschnitt in Richtung der anderen Stützeinrichtung verschwenkt ist und gerade so lange ist, dass er bis zu dieser anderen Stützeinrichtung ragt, zumindest jedoch bis nahe an die andere Stützeinrichtung heran.

Der zweite Abschnitt der Stützeinrichtung kann dabei insbesondere so lang oder im Wesentlichen so lang sein, dass seine Länge dem Abstand beider Stützeinrichtungen voneinander entspricht, bezogen auf deren Aufbauzustand.

Vorgesehen sein kann, dass der zweite Abschnitt im Transportzustand an der anderen Stützeinrichtung anliegt.

Bei einer bevorzugten Ausführungsform kann vorgesehen sein, dass die Schwenkachse einen Abstand vom Verbindungsbereich aufweist, der ungefähr 15% bis 30% der Erstreckung der Stützeinrichtung vom Verbindungsbereich zum Aufstellbereich beträgt, bevorzugt ungefähr 20% bis 25%. Bei einer Umsetzung der Portalvorrichtung in der Praxis kann dabei zum Beispiel die oben genannte Wirkung eintreten, dass der zweite Abschnitt im Transportzustand bis zur anderen Stützeinrichtung ragt.

Bei einer bevorzugten Ausführungsform der Portalvorrichtung kann vorgesehen sein, dass die Schwenkachse einen Abstand vom Verbindungsbereich aufweist, der ungefähr 25% bis 45% der Erstreckung der Stützeinrichtung vom Verbindungsbereich zum Aufstellbereich beträgt, bevorzugt ungefähr 30% bis 40%. Der zweite Abschnitt kann bei dieser Ausführungsform bei einer Umsetzung in der Praxis beispielsweise so lang sein, dass er im Transportzustand nicht bis zur anderen Stützeinrichtung ragt.

Günstig ist es, wenn die Stützeinrichtung zwei im Abstand zueinander angeordnete Träger mit einem jeweiligen ersten Trägersegment und einem jeweiligen zweiten Trägersegment umfasst, die relativ zueinander um die Schwenkachse schwenkbar sind, wobei der erste Abschnitt die ersten Trägersegmente und der zweite Abschnitt die zweiten Trägersegmente umfasst. Die Stützeinrichtung kann zum Beispiel zwei entlang der Schwenkachse voneinander beabstandete Träger mit einem jeweiligen ersten Trägersegment und einem jeweiligen zweiten Trägersegment aufweisen. Die Trägersegmente jedes Trägers sind relativ zueinander um die Schwenkachse schwenkbar. Die Trägersegmente können miteinander verbunden sein. Beispielsweise wird der Aufstellbereich durch ein die zweiten Trägersegmente miteinander verbindendes Aufstellelement der Stützeinrichtung gebildet.

Besonders vorteilhaft ist es, wenn beide Stützeinrichtungen einen jeweiligen ersten Abschnitt, einen jeweiligen zu diesem verschwenkbaren zweiten Abschnitt und eine jeweilige Gelenkeinrichtung mit Schwenkachse umfassen. Die Vorteile, die vorstehend im Zusammenhang mit der Erläuterung der erfindungsgemäßen Portalvorrichtung und der bevorzugten Ausführungsformen für eine der Schwenkeinrichtungen erwähnt wurden, können auf diese Weise bei beiden Schwenkeinrichtungen erzielt werden. Durch Vorsehen einer Gelenkeinrichtung an jeder Schwenkeinrichtung kann ein noch kompakterer Transportzustand der Portalvorrichtung erzielt werden. Beim Aufbau können die jeweiligen zweiten Abschnitte relativ zu den jeweiligen ersten Abschnitten verschwenkt werden, um die Portalvorrichtung in den Aufbauzustand zu überführen.

Es versteht sich, dass beide Stützeinrichtungen wie vorstehend erläutert im Abstand zueinander angeordnete Träger mit jeweiligen ersten Trägersegmenten und jeweiligen zweiten Trägersegmenten umfassen können.

Darüber hinaus versteht es sich, dass die Schwenkachse der Gelenkeinrichtung der (weiteren) Stützeinrichtung wie vorstehend erläutert vorteilhafterweise quer und insbesondere senkrecht zu deren Erstreckung im Aufbauzustand ausgerichtet sein kann und/oder quer und insbesondere senkrecht zur Erstreckungsrichtung der Querträgereinrichtung.

Beide Stützeinrichtungen können im Aufbauzustand geradlinig erstreckt sein.

An beiden Stützeinrichtungen können Anschlagelemente und/oder Arretierungseinrichtungen wie vorstehend erläutert angeordnet sein.

In beiden Fällen kann der Schwenkwinkel 90° oder ungefähr 90° betragen.

In beiden Fällen können die zweiten Abschnitte parallel zur Querträgereinrichtung ausgerichtet sein, wenn sie den Transportzustand einnehmen.

Die beiden Schwenkachsen sind vorteilhafterweise parallel zueinander ausgerichtet.

Als vorteilhaft erweist es sich, wenn die Schwenkachsen vom jeweiligen Verbindungsbereich der Stützeinrichtungen mit der Querträgereinrichtung unterschiedliche Abstände aufweisen. Beispielsweise sind die ersten Abschnitte der Stützeinrichtungen unterschiedlich lang und die zweiten Abschnitte ebenfalls unterschiedlich lang, wobei die Gesamtlänge beider Stützeinrichtungen gleich ist. Die Stützeinrichtung mit dem kürzeren ersten Abschnitt weist eine Schwenkachse auf, deren Abstand zum Verbindungsbereich geringer ist als bei der Stützeinrichtung mit dem längeren ersten Abschnitt. Die letztere Stützeinrichtung weist einen zweiten Abschnitt auf, der kürzer ist als der zweite Abschnitt der erstgenannten Stützeinrichtung. Dieser zweite Abschnitt - der erstgenannten Stützeinrichtung - ist zur Erzielung eines kompakten Transportzustandes vorzugsweise so lang, dass seine Länge gleich oder im Wesentlichen gleich einen Abstand der Stützeinrichtungen voneinander ist, bezogen auf den Aufbauzustand. Im auf der Aufstellfläche positionierten Zustand der Portalvorrichtung ist die Schwenkachse der erstgenannten Stützeinrichtung höher angeordnet als die Schwenkeinrichtung der zweiten Stützeinrichtung.

Das Vorsehen der "unterschiedlich hohen" Schwenkachsen weist den Vorteil auf, dass ein besonders kompakter Transportzustand erzielt werden kann. Eine Stützeinrichtung kann dabei bevorzugt so abgewinkelt sein, dass der zweite Abschnitt vorteilhafterweise bis zum ersten Abschnitt der anderen Stützeinrichtung ragt. Die andere Stützeinrichtung kann ebenfalls abgewinkelt werden, wobei deren zweiter Abschnitt beispielsweise seitlich neben dem zweiten Abschnitt der ersten Stützeinrichtung angeordnet ist.

Von Vorteil ist es zur Erzielung eines kompakten Transportzustandes, wenn die zweiten Abschnitte im Transportzustand aneinander anliegen.

Die erfindungsgemäße Portalvorrichtung kann insbesondere teilweise vormontiert ausgeliefert werden. Beispielsweise kann vorgesehen sein, dass eine Stützeinrichtung eine elektrische Einrichtung der Fahrzeugwaschanlage umfasst. Beispielsweise ist ein Behälter mit einem Gehäuse zur Aufnahme elektrisch wirksamer Komponenten an der Stützeinrichtung angeordnet.

Vorgesehen sein kann, dass eine Stützeinrichtung eine hydraulische Einrichtung der Fahrzeugwaschanlage umfasst. Beispielsweise ist ein ein Gehäuse aufnehmender Behälter für die hydraulisch wirksamen Komponenten an einer der Stützeinrichtungen angeordnet.

Günstig ist es, wenn die elektrische Einrichtung und die hydraulische Einrichtung an unterschiedlichen Stützeinrichtungen angeordnet sind.

Günstig ist es, wenn elektrische, pneumatische und/oder hydraulische Leitungen an zumindest einer Stützeinrichtung und/oder an der Querträgereinrichtung gehalten sind. Es besteht vorteilhafterweise die Möglichkeit, bereits werksseitig Leitungen zu verlegen, um den Montageaufwand am Aufstellort zu reduzieren.

Zur Erzielung desselben Vorteils ist es günstig, wenn mindestens ein Antriebsmotor für einen Fahrantrieb der Portalvorrichtung oder für ein Reinigungsaggregat an einer Stützeinrichtung und/oder an der Querträgereinrichtung gehalten ist. Beispielsweise sind Fahrantriebe für die Portalvorrichtung an den Stützeinrichtungen gehalten. Vorgesehen sein kann alternativ oder ergänzend, dass ein Antriebsmotor für ein Reinigungsaggregat an einer Stützeinrichtung oder an der Querträgereinrichtung gehalten ist.

Alternativ oder ergänzend kann vorgesehen sein, dass mindestens eine Aufnahme für ein Reinigungsaggregat, beispielsweise eine Reinigungsbürste oder eine Sprüheinrichtung, an zumindest einer Stützeinrichtung und/oder an der Querträgereinrichtung gehalten ist.

Wie eingangs erwähnt betrifft die vorliegende Erfindung auch eine Fahrzeugbehandlungsanlage. Eine erfindungsgemäße Fahrzeugbehandlungsanlage umfasst mindestens eine Portalvorrichtung der vorstehend genannten Art und mindestens ein Fahrzeugbehandlungsaggregat. Bei der Fahrzeugbehandlungsanlage handelt es sich insbesondere um eine Fahrzeugwaschanlage, die zum Beispiel als Portalwaschanlage oder als Waschstraße ausgestaltet sein kann. Das Behandlungsaggregat kann zum Beispiel ein Reinigungsaggregat sein.

Die Vorteile der erfindungsgemäßen Portalvorrichtung können auch bei der erfindungsgemäßen Fahrzeugbehandlungsanlage erzielt werden. Vorteilhafte Ausführungsformen der Fahrzeugbehandlungsanlage ergeben sich durch vorteilhafte Ausführungsformen der erfindungsgemäßen Portalvorrichtung.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine bevorzugte Ausführungsform einer erfindungsgemäßen Portalvorrichtung in perspektivischer Darstellung auf einer schematisch dargestellten Aufstellfläche;
- Figur 2:: eine Vorderansicht der Portalvorrichtung aus Figur 1 in einem Transportzustand, wobei zwei Stützeinrichtungen jeweils einen abgewinkelten Zustand einnehmen;
- Figur 3:: die Portalvorrichtung nach Überführen einer Stützeinrichtung in einen geradlinig erstreckten Zustand;
- Figur 4:: die Portalvorrichtung in einem Aufbauzustand, in dem beide Stützeinrichtungen einen geradlinig erstreckten Zustand einnehmen; und
- Figur 5:: eine schematische Darstellung einer erfindungsgemäßen Fahrzeugbehandlungsanlage, ausgestaltet als Fahrzeugwaschanlage.

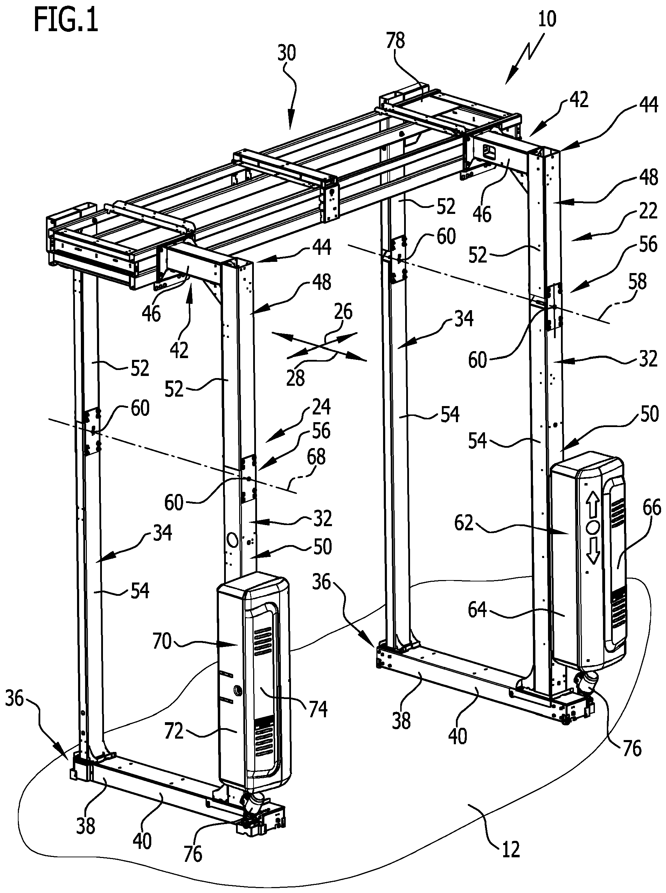

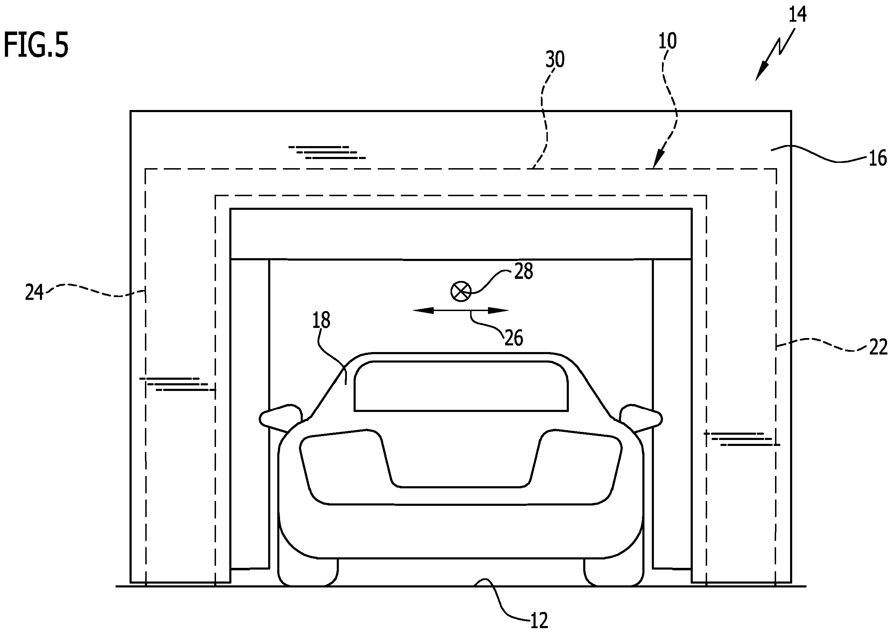

Figur 1 zeigt in schematischer Darstellung eine insgesamt mit dem Bezugszeichen 10 belegte vorteilhafte Ausführungsform einer erfindungsgemäßen Portalvorrichtung. Die Portalvorrichtung 10 ist in einem Aufbauzustand auf einer schematisch dargestellten Aufstellfläche 12 stehend dargestellt. Die Portalvorrichtung 10 ist insbesondere Bestandteil einer in Figur 5 schematisch dargestellten Fahrzeugbehandlungsanlage 14, ausgestaltet als Fahrzeugwaschanlage.

Die Fahrzeugbehandlungsanlage 14 ist vorliegend als Portalanlage ausgestaltet und umfasst ein Waschportal 16, das auf der Aufstellfläche 12 relativ zu einem stationären, zu waschenden Fahrzeug 18 verfahrbar ist. Das Fahrzeug 18 ist im vorliegenden Beispiel ein PKW, und die Fahrzeugbehandlungsanlage 14 ist für die PKW-Reinigung ausgestaltet. Hiervon abweichend kann die Erfindung selbstverständlich auch bei einer Nutzfahrzeugbehandlungsanlage zum Einsatz kommen, zum Beispiel einer Waschanlage für LKWs oder Busse.

Die Fahrzeugbehandlungsanlage 14 umfasst in an sich bekannter Weise mindestens ein Reinigungsaggregat, insbesondere eine Reinigungsbürste 20. Vorliegend sind als Reinigungsbürsten 20 eine Dachbürste zum Abreinigen obenliegender Fahrzeugflächen und zwei Seitenbürsten zum Abreinigen seitlicher Seitenflächen sowie vorzugsweise des Hecks und der Front des Fahrzeugs vorhanden. Darüber hinaus kann die Fahrzeugbehandlungsanlage 14 eine in der Zeichnung nicht dargestellte Sprüheinrichtung zum Versprühen einer Reinigungsflüssigkeit, insbesondere Wasser, umfassen.

Die Portalvorrichtung 10 umfasst eine erste Stützeinrichtung 22 und eine zweite Stützeinrichtung 24. Die Stützeinrichtungen 22, 24 sind relativ zueinander bezüglich einer Raumrichtung 26 beabstandet. Die Raumrichtung 26 ist im bestimmungsgemäßen Gebrauch der Portalvorrichtung 10 insbesondere eine Querrichtung der Fahrzeugbehandlungsanlage 14. Die Querrichtung ist quer zu einer zweiten Raumrichtung 28 ausgerichtet. Die Raumrichtung 28 ist im bestimmungsgemäßen Gebrauch eine Längsrichtung der Fahrzeugbehandlungsanlage 14, wobei das Fahrzeug 18 vorzugsweise entlang der Längsrichtung 28 ausgerichtet ist.

Die Stützeinrichtungen 22, 24 sind miteinander über eine Querträgereinrichtung verbunden, die eine Traverse der Portalvorrichtung 10 ausbildet.

Die Stützeinrichtungen 22, 24 sind relativ zueinander weitgehend symmetrisch bezüglich einer Mittellängsebene der Portalvorrichtung 10 ausgestaltet, so dass nachfolgend zunächst nur auf die Stützeinrichtung 22 eingegangen wird, die in der Zeichnung jeweils rechts dargestellt ist. Die diesbezüglichen Erläuterungen gelten auch für die Stützeinrichtung 24, in der Zeichnung links dargestellt. Auf etwaige Abweichungen zwischen den Konfigurationen der Stützeinrichtungen 22, 24 wird nachfolgend noch eingegangen.

Die Stützeinrichtung 22 umfasst im vorliegenden Beispiel zwei im Abstand zueinander angeordnete Träger 32, 34. Die Träger 32, 34 sind vorliegend jeweils längserstreckt ausgebildet und parallel zueinander ausgerichtet. Die Träger 32, 34 sind entlang der Raumrichtung 28 voneinander beabstandet. An einer Endseite 36, die im Gebrauch der Portalvorrichtung 10 der Aufstellfläche 12 zugewandt ist, umfasst die Stützeinrichtung 22 einen Aufstellbereich 38. Der Aufstellbereich 38 wird durch ein die Träger 32, 34 endseitig miteinander verbindendes Aufstellelement 40 ausgebildet.

An einer dem Aufstellbereich 38 abgewandten Seite umfasst die Stützeinrichtung 22 einen Verbindungsbereich 42. Der Verbindungsbereich 42 ist an einer der Endseite 36 gegenüberliegenden Endseite 44 der Stützeinrichtung 22 angeordnet. Am Verbindungsbereich 42 ist die Stützeinrichtung 22 mit der Querträgereinrichtung 30 verbunden.

Im vorliegenden Fall sind die Stützeinrichtung 22 und die Querträgereinrichtung 30 unbeweglich miteinander verbunden.

Die Querträgereinrichtung 30 umfasst im vorliegenden Fall eine Mehrzahl von in der Raumrichtung 26 verlaufenden Trägern. Dies ist jedoch nicht erfindungswesentlich, ebenso wie die Art der Verbindung der Querträgereinrichtung 30 mit der Stützeinrichtung 22. Hierzu ist im vorliegenden Fall ein Verbindungselement 46 vorgesehen, über die der Träger 32 mit der Querträgereinrichtung 30 koppelt. Der Träger 34 ist über eine flanschartige Verbindung mit der Querträgereinrichtung 30 verbunden.

Im bestimmungsgemäßen Gebrauch der Portalvorrichtung 10 ist die Stützeinrichtung 22 in einer Höhenrichtung erstreckt und insbesondere senkrecht zur Aufstellfläche 12 ausgerichtet. Die Querträgereinrichtung 30 verläuft parallel zu der von der Aufstellfläche 12 definierten Ebene. Insbesondere ist die Stützeinrichtung 22 vertikal und die Querträgereinrichtung 30 horizontal ausgerichtet.

Die Stützeinrichtung 22 umfasst einen ersten Abschnitt 48 und einen zweiten Abschnitt 50. Der erste Abschnitt 48 umfasst insbesondere den Verbindungsbereich 42, und der zweite Abschnitt 50 insbesondere den Aufstellbereich 38. Im bestimmungsgemäßen Gebrauch der Portalvorrichtung 10 ist der erste Abschnitt 48 obenseitig an der Stützeinrichtung 22 angeordnet und der zweite Abschnitt 50 untenseitig.

Jeder Träger 32, 34 umfasst ein erstes Trägersegment 52 und ein zweites Trägersegment 54. Der erste Abschnitt 48 umfasst die beiden ersten Trägersegmente 52, und der zweite Abschnitt 50 umfasst die zweiten Trägersegmente 54. Die ersten Trägersegmente 52 sind der Querträgereinrichtung 30 zugewandt an den Trägern 32, 34 angeordnet, und die zweiten Trägersegmente 54 sind der Querträgereinrichtung 30 abgewandt an den Trägern 32, 34 angeordnet.

Die Stützeinrichtung 22 umfasst eine Gelenkeinrichtung 56 die zwischen dem Aufstellbereich 38 und dem Verbindungsbereich 42 angeordnet ist. Die Gelenkeinrichtung 56 ermöglicht es, den zweiten Abschnitt 50 relativ zum ersten Abschnitt 48 zu verschwenken. Dabei definiert die Gelenkeinrichtung 56 eine Schwenkachse 58. An einem jeweiligen Träger 32, 34 ist ein zwischen den Trägersegmenten 52 und 54 wirksames Gelenk 60 angeordnet, so dass die Schwenkachse 58 eine gemeinsame Achse beider Gelenke 60 ist.

Die Schwenkachse 58 ist senkrecht zur Erstreckungsrichtung der Stützeinrichtung 22 in deren Aufbauzustand ausgerichtet. Darüber hinaus ist die Schwenkachse 58 senkrecht zur Querträgereinrichtung 30 ausgerichtet. Die Schwenkachse 58 verläuft entlang der Raumrichtung 28. Im bestimmungsgemäßen Gebrauch der Portalvorrichtung 10 ist die Schwenkachse 58 parallel zur Ebene der Aufstellfläche 12 ausgerichtet, insbesondere horizontal.

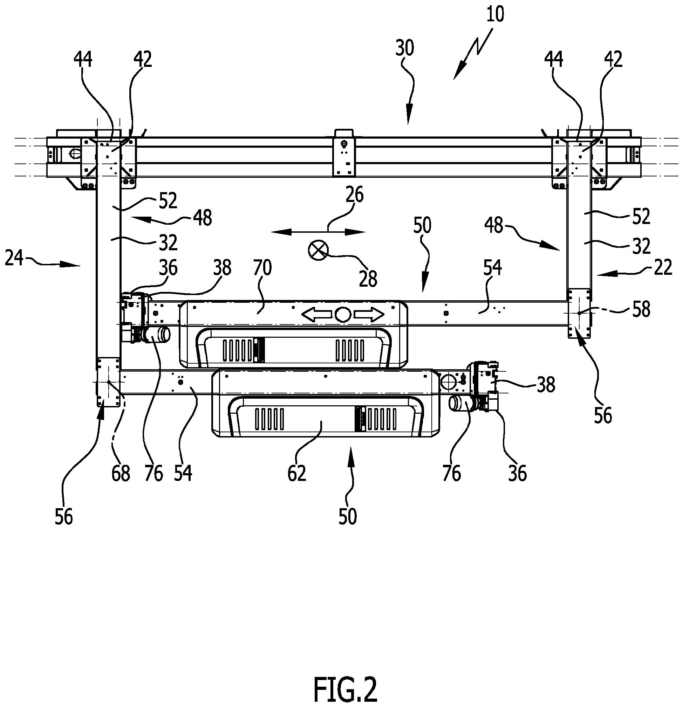

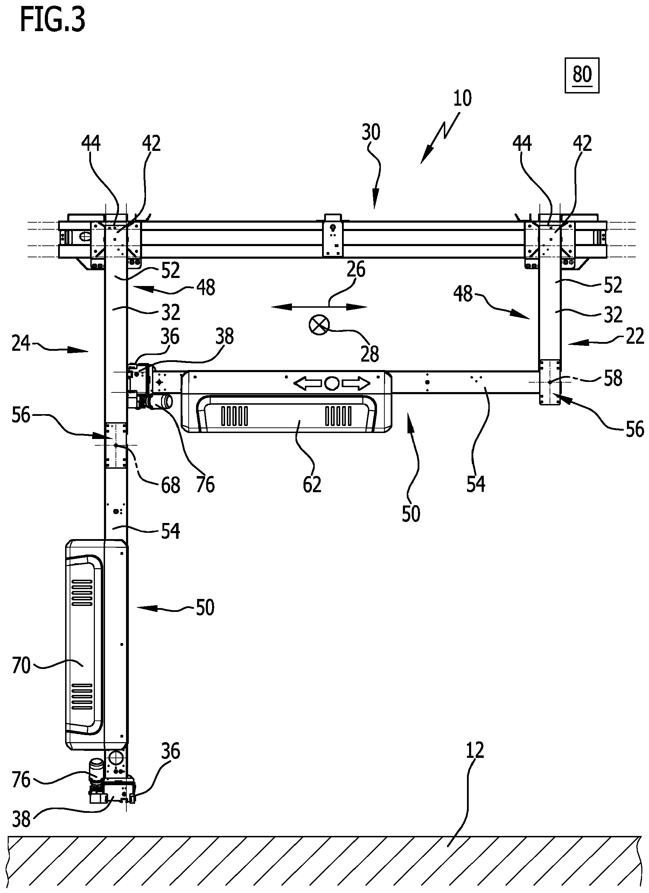

Wie insbesondere aus den Figuren 2 und 3 hervorgeht, sind die Abschnitte 48, 50 relativ zueinander um die Schwenkachse 58 schwenkbar. Dabei kann insbesondere der zweite Abschnitt 50 relativ zum ersten Abschnitt 48 verschwenkt werden, der an der Querträgereinrichtung 30 festgelegt ist.

Im Aufbauzustand weist die Stützeinrichtung 22 wie erwähnt eine geradlinige Erstreckung auf.

Der Schwenkwinkel, um den die Abschnitte 48, 50 relativ zueinander verschwenkbar sind, beträgt im vorliegenden Fall 90°. Dabei ist die Schwenkachse 58 so angeordnet, dass der Abschnitt 50 in einer abgewinkelten Stellung relativ zum Abschnitt 48 angeordnet werden kann. Dabei ragt der Abschnitt 50 bis zur Stützeinrichtung 24. Es besteht die Möglichkeit, dass der Abschnitt 50 die Stützeinrichtung 24 kontaktiert, insbesondere an deren erstem Abschnitt 48.

Der zweite Abschnitt 50 der Stützeinrichtung 22 ist dabei so lang, dass seine Länge dem Abstand der ersten Abschnitte 48 beider Stützeinrichtungen 22, 24 voneinander entspricht. Bei der erläuterten Ausführungsform der erfindungsgemäßen Portalvorrichtung 10 entspricht der Abstand der Schwenkachse 58 vom Verbindungsbereich 42 vorliegend ungefähr 25% der Länge der Stützeinrichtung 22.

Sind die Abschnitte 48, 50 relativ zueinander in der abgewinkelten Stellung angeordnet, nimmt die Stützeinrichtung 22 einen Transportzustand ein (Figuren 2 und 3). Im Transportzustand ist der zweite Abschnitt 50 parallel zur Querträgereinrichtung 30 ausgerichtet. Der Transportzustand erlaubt es, die Portalvorrichtung 10 platzsparend zu transportieren. Zu diesem Zweck erweist sich insbesondere auch die Möglichkeit als vorteilhaft, die Stützeinrichtung 24 wie nachfolgend erläutert ebenfalls in eine abgewinkelte Stellung zu bringen.

Die Stützeinrichtung 22 umfasst ferner eine hydraulische Einrichtung 62. Die hydraulische Einrichtung 62 umfasst einen ein Gehäuse 64 aufweisenden Behälter 66. Der Behälter 66 ist vorliegend am zweiten Abschnitt 50 festgelegt, insbesondere am Träger 32.

Die hydraulische Einrichtung 62 nimmt flüssigkeitsführende Komponenten für den Betrieb der Fahrzeugbehandlungsanlage 14 auf.

Bei der zweiten Stützeinrichtung 24 sind ebenfalls Träger 32, 34, der Aufstellbereich 38, das Aufstellelement 40, den Verbindungsbereich 42, und das Verbindungselement 46 und insbesondere die Abschnitte 48 und 50 vorgesehen. Es sind ferner jeweilige Trägersegmente 52 und 54 vorgesehen. Auch die Stützeinrichtung 24 umfasst eine Gelenkeinrichtung 56 mit Gelenken 60, die zwischen den Trägersegmenten 52, 54 wirksam sind.

Das Bezugszeichen 68 kennzeichnet die Schwenkachse der Stützeinrichtung 24.

Die Schwenkachsen 58 und 68 sind parallel zueinander ausgerichtet. Vorliegend ist der Abstand der Schwenkachsen 58, 68 vom jeweiligen Verbindungsbereich 42 unterschiedlich. Insbesondere weist die Schwenkachse 68 vom Verbindungsbereich 42 der Stützeinrichtung 24 einen größeren Abstand auf als die Schwenkachse 68 vom Verbindungsbereich 42 der Stützeinrichtung 22. Im bestimmungsgemäßen Gebrauch der Portalvorrichtung 10 liegt dementsprechend die Schwenkachse 68 niedriger als die Schwenkachse 58, oder umgekehrt letztere höher als die Schwenkachse 68.

Der Abstand der Schwenkachse 68 vom Verbindungsbereich 42 entspricht bei der erläuterten Ausführungsform der erfindungsgemäßen Portalvorrichtung 10 vorliegend ungefähr 35% der Länge der Stützeinrichtung 24.

Infolgedessen ist der erste Abschnitt 48 der Stützeinrichtung 24 länger als der erste Abschnitt 48 der Stützeinrichtung 22. Da beide Stützeinrichtungen 22, 24 dieselbe Länge aufweisen, ist infolgedessen der zweite Abschnitt 50 der Stützeinrichtung 24 kürzer als der zweite Abschnitt 50 der Stützeinrichtung 22.

Wie insbesondere aus den Figuren 2 und 3 hervorgeht, sind die Abschnitte 48, 50 der Stützeinrichtung 24 relativ zueinander um die Schwenkachse 68 verschwenkbar. Auch in diesem Fall beträgt der Schwenkwinkel 90°. Dies gibt die Möglichkeit, die Abschnitte 48, 50 relativ zueinander ausgehend von einem abgewinkelten Transportzustand (Figur 2) zu verschwenken und in einen Aufbauzustand zu überführen (Figur 3), in dem die Stützeinrichtung 24 geradlinig erstreckt ausgebildet ist.

Im Transportzustand ist der zweite Abschnitt 50 parallel zum zweiten Abschnitt der Stützeinrichtung 22 und zur Querträgereinrichtung 30 ausgerichtet.

Die Stützeinrichtung 24 umfasst eine elektrische Einrichtung 70, die elektrische Komponenten der Fahrzeugbehandlungsanlage 14 mit aufnimmt. Die elektrische Einrichtung 70 ist vorliegend am zweiten Abschnitt 50 und insbesondere am Träger 32 festgelegt und umfasst einen ein Gehäuse 72 aufweisenden Behälter 74.

Die Gelenke 60 mit der Schwenkachse 68 sind derart positioniert, dass die Abschnitte 50 im jeweiligen Transportzustand aneinander anliegen. Dabei liegen beispielsweise beide Gehäuse 72 aneinander an (Figur 2).

Die Portalvorrichtung 10 kann werksseitig vormontiert sein. Neben den beiden bereits bestückten Behältern 66, 74 sind dabei zum Beispiel Antriebsmotoren 76 bereits montiert, die zum Verfahren der Portalvorrichtung 10 dienen. Vorliegend ist an jedem Aufstellelement 40 ein Antriebsmotor 76 vormontiert.

Des Weiteren sind (nicht dargestellt) elektrische Leitungen, hydraulische Leitungen für Reinigungsflüssigkeit und/oder pneumatische Leitungen bereits an der Portalvorrichtung 10 vormontiert. Die elektrischen, hydraulischen und/oder pneumatischen Leitungen verlaufen beispielsweise innerhalb der Träger 32 und/oder 34 oder entlang der Querträgereinrichtung 30.

An der Querträgereinrichtung 30 ist vorteilhafterweise ein weiterer Antriebsmotor 78 vormontiert, bei dem es sich um einen Antriebsmotor für die Dachbürste der Fahrzeugbehandlungsanlage 14 handelt.

Vorteilhafterweise sind an der Portalvorrichtung 10 bereits vorgebildete Aufnahmen zum Anbringen der Reinigungsaggregate angeordnet oder gebildet.

Zum platzsparenden Transport und zur platzsparenden Lagerung kann die Portalvorrichtung 10 den Transportzustand einnehmen. Dabei sind die Abschnitte 48 und 50 beider Stützeinrichtungen 22, 24 relativ zueinander verschwenkt und nehmen die abgewinkelte, eingeklappte Stellung ein (Figur 2). Im Transportzustand ist der Raumbedarf für die Portalvorrichtung 10 minimiert.

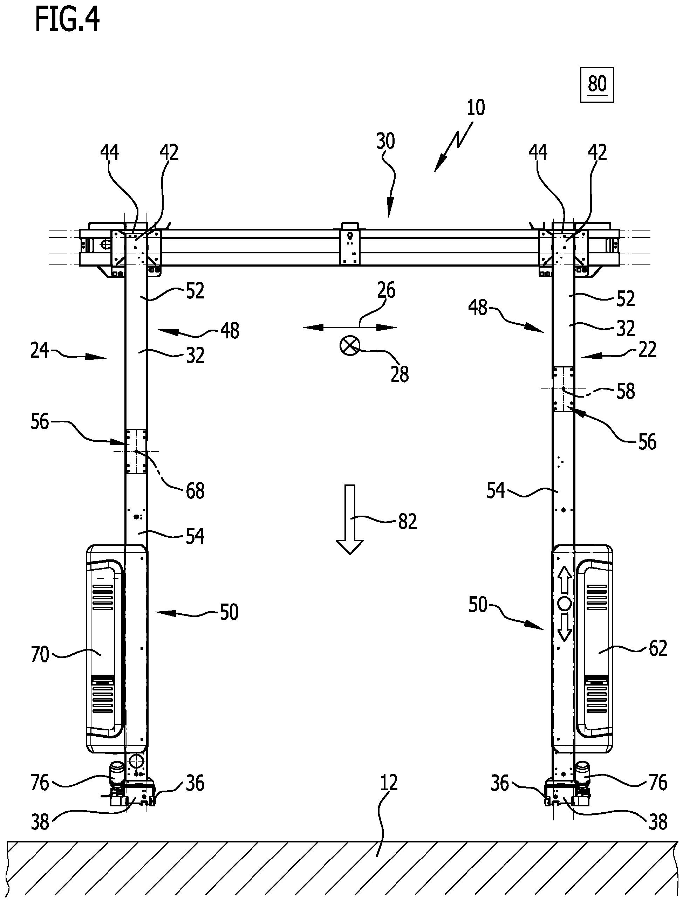

Beim Aufstellen der Portalvorrichtung 10 kann zum Beispiel eine Hubeinrichtung 80 zum Einsatz kommen, die in den Figuren 3 und 4 schematisch dargestellt ist. Beispielsweise wird die Hubeinrichtung 80 durch einen Gabelstapler gebildet.

Mit der Hubeinrichtung kann die Portalvorrichtung 10 oberhalb der Aufstellfläche 12 gehalten werden. Zunächst wird die Stützeinrichtung 24 in den Aufbauzustand überführt, indem der zweite Abschnitt 50 relativ zum ersten Abschnitt 48 verschwenkt wird, weg von der Stützeinrichtung 22 (Figur 3). Über ein Anschlagelement und/oder eine vorzugsweise automatische Arretiereinrichtung der Gelenkeinrichtung 56 wird bevorzugt sichergestellt, dass die Abschnitte 48, 50 relativ zueinander die korrekte Solllage einnehmen.

Im Anschluss daran wird auch die Stützeinrichtung 22 in den Aufbauzustand überführt, indem der zweite Abschnitt 50 relativ zum ersten Abschnitt 48 verschwenkt wird, weg von der Stützeinrichtung 24 (Figur 4).

Im Aufbauzustand der Portalvorrichtung 10 nehmen beide Stützeinrichtungen 22, 24 die in Figur 4 dargestellte aufgeklappte Stellung ein. Anschließend kann die Portalvorrichtung 10 über die Hubeinrichtung 80 auf die Aufstellfläche 12 abgesenkt werden, wie durch den Pfeil 82 symbolisiert ist.

Es kann vorgesehen sein, dass die Portalvorrichtung 10 vom Aufbauzustand wieder in den Transportzustand überführt werden kann. Dabei kann zunächst der zweite Abschnitt 50 der Stützeinrichtung 22 relativ zu deren ersten Abschnitt 48 in die abgewinkelte, eingeklappte Stellung verschwenkt werden, in Richtung der Stützeinrichtung 24. Anschließend kann der zweite Abschnitt 50 der Stützeinrichtung 24 relativ zu deren ersten Abschnitt 48 in die abgewinkelte, eingeklappte Stellung verschwenkt werden, in Richtung der Stützeinrichtung 22.

### Bezugszeichenliste

- 10: Portalvorrichtung
- 12: Aufstellfläche
- 14: Fahrzeugbehandlungsanlage
- 16: Waschportal
- 18: Fahrzeug
- 20: Reinigungsbürste
- 22, 24: Stützeinrichtung
- 26, 28: Raumrichtung
- 30: Querträgereinrichtung
- 32, 34: Träger
- 36, 44: Endseite
- 38: Aufstellbereich
- 40: Aufstellelement
- 42: Verbindungsbereich
- 46: Verbindungselement
- 48: erster Abschnitt
- 50: zweiter Abschnitt
- 52: erstes Trägersegment
- 54: zweites Trägersegment
- 56: Gelenkeinrichtung
- 58, 68: Schwenkachse
- 60: Gelenk
- 62: hydraulische Einrichtung
- 64, 72: Gehäuse
- 66, 74: Behälter
- 70: elektrische Einrichtung
- 76, 78: Antriebsmotor
- 80: Hubeinrichtung
- 82: Pfeil

## Patentansprüche

1. Portalvorrichtung für eine Fahrzeugbehandlungsanlage (14), umfassend zwei Stützeinrichtungen (22, 24), die in einem Abstand zueinander angeordnet sind, und eine die Stützeinrichtungen (22, 24) miteinander verbindende Querträgereinrichtung (30), wobei die Stützeinrichtungen (22, 24) über einen jeweiligen Aufstellbereich (38) auf einer Aufstellfläche (12) für die Portalvorrichtung (10) aufstellbar sind und mit der Querträgereinrichtung (30) an einem dem Aufstellbereich (38) abgewandten Verbindungsbereich (42) verbunden sind, wobei mindestens eine Stützeinrichtung (22, 24) einen ersten Abschnitt (48) und einen zweiten Abschnitt (50) aufweist, wobei der erste Abschnitt (48) am Verbindungsbereich (42) mit der Querträgereinrichtung (30) verbunden ist und der zweite Abschnitt (50) den Aufstellbereich (38) umfasst, sowie eine den ersten Abschnitt (48) mit dem zweiten Abschnitt (50) verbindende, zwischen dem Aufstellbereich (38) und dem Verbindungsbereich (42) angeordnete Gelenkeinrichtung (56), **dadurch gekennzeichnet, dass** der zweite Abschnitt (50) relativ zum ersten Abschnitt (48) um eine Schwenkachse (58, 68) von der jeweils anderen Stützeinrichtung (22, 24) weg schwenkbar ist.

2. Portalvorrichtung nach Anspruch 1, **dadurch gekennzeichnet, dass** der Aufstellbereich (38) an einem der Querträgereinrichtung (30) abgewandten Endseite (36) der Stützeinrichtungen (22, 24) angeordnet ist.

3. Portalvorrichtung nach Anspruch 1 oder 2, **dadurch gekennzeichnet, dass** der Verbindungsbereich (42) an einer Endseite (44) der Stützeinrichtungen (22, 24) angeordnet ist, die der Querträgereinrichtung (30) zugewandt ist.

4. Portalvorrichtung nach einem der voranstehenden Ansprüche, **dadurch gekennzeichnet, dass** mindestens eine der Stützeinrichtungen (22, 24) am Verbindungsbereich (42) unbeweglich mit der Querträgereinrichtung (30) verbunden ist und/oder dass die mindestens eine Stützeinrichtung (22, 24) im Aufbauzustand geradlinig erstreckt ausgebildet ist.

5. Portalvorrichtung nach einem der voranstehenden Ansprüche, **dadurch gekennzeichnet, dass** ein Schwenkwinkel zwischen dem ersten Abschnitt (48) und dem zweiten Abschnitt (50) 90° oder im Wesentlichen 90° beträgt und/oder dass die Schwenkachse (58, 68) quer und insbesondere senkrecht zur Erstreckungsrichtung der mindestens einen Stützeinrichtung (22, 24) in deren Aufbauzustand ausgerichtet ist.

6. Portalvorrichtung nach einem der voranstehenden Ansprüche, **dadurch gekennzeichnet, dass** die Schwenkachse (58, 68) quer und insbesondere senkrecht zu einer Erstreckungsrichtung der Querträgereinrichtung (30) ausgerichtet ist.

7. Portalvorrichtung nach einem der voranstehenden Ansprüche, **dadurch gekennzeichnet, dass** der zweite Abschnitt (50) im Transportzustand parallel zur Querträgereinrichtung (30) ausgerichtet ist.

8. Portalvorrichtung nach einem der voranstehenden Ansprüche, **dadurch gekennzeichnet, dass** die Schwenkachse (58, 68) derart angeordnet ist, dass der zweite Abschnitt (50) im Transportzustand bis zur anderen Stützeinrichtung (22, 24) oder nahe an die andere Stützeinrichtung (22, 24) ragt, vorzugsweise dass der zweite Abschnitt (50) im Transportzustand an der anderen Stützeinrichtung (22, 24) anliegt.

9. Portalvorrichtung nach einem der voranstehenden Ansprüche, **dadurch gekennzeichnet, dass** die Schwenkachse (58, 68) einen Abstand vom Verbindungsbereich (42) aufweist, der ungefähr 15% bis 30% der Erstreckung der Stützeinrichtung (22, 24) vom Verbindungsbereich (42) zum Aufstellbereich (38) beträgt, bevorzugt ungefähr 20% bis 25%.

10. Portalvorrichtung nach einem der voranstehenden Ansprüche, **dadurch gekennzeichnet, dass** die Schwenkachse (58, 68) einen Abstand vom Verbindungsbereich (42) aufweist, der ungefähr 25% bis 45% der Erstreckung der Stützeinrichtung (22, 24) vom Verbindungsbereich (42) zum Aufstellbereich (38) beträgt, bevorzugt ungefähr 30% bis 40%.

11. Portalvorrichtung nach einem der voranstehenden Ansprüche, **dadurch gekennzeichnet, dass** die Stützeinrichtung (22, 24) zwei im Abstand zueinander angeordnete Träger (32, 34) mit einem jeweiligen ersten Trägersegment (52) und einem jeweiligen zweiten Trägersegment (54) umfasst, die relativ zueinander um die Schwenkachse (58, 68) schwenkbar sind, wobei der erste Abschnitt (48) die ersten Trägersegmente (52) und der zweite Abschnitt (50) die zweiten Trägersegmente (54) umfasst.

12. Portalvorrichtung nach einem der voranstehenden Ansprüche, **dadurch gekennzeichnet, dass** beide Stützeinrichtungen (22, 24) einen jeweiligen ersten Abschnitt (48), einen jeweiligen zu diesem verschwenkbaren zweiten Abschnitt (50) und eine jeweilige Gelenkeinrichtung (56) mit Schwenkachse (58, 68) umfassen, wobei vorzugsweise mindestens eines der Folgenden gilt:
- die Schwenkachsen (58, 60) sind parallel zueinander ausgerichtet.
- die Schwenkachsen (58, 68) weisen vom jeweiligen Verbindungsbereich (42) der Stützeinrichtungen (22, 24) mit der Querträgereinrichtung (30) unterschiedliche Abstände auf.

13. Portalvorrichtung nach Anspruch 12, **dadurch gekennzeichnet, dass** die Schwenkachsen derart angeordnet sind, dass die zweiten Abschnitte (50) im Transportzustand aneinander anliegen.

14. Portalvorrichtung nach einem der voranstehenden Ansprüche, **dadurch gekennzeichnet, dass** zumindest eines der Folgenden gilt:
- eine Stützeinrichtung (22, 24) umfasst eine elektrische Einrichtung (70) der Fahrzeugbehandlungsanlage (14);
- eine Stützeinrichtung umfasst eine hydraulische Einrichtung (62) der Fahrzeugbehandlungsanlage (14);
- elektrische, pneumatische und/oder hydraulische Leitungen sind an zumindest einer Stützeinrichtung (22, 24) und/oder an der Querträgereinrichtung (30) gehalten;
- mindestens ein Antriebsmotor (76, 78) für einen Fahrantrieb der Portalvorrichtung (10) oder für ein Reinigungsaggregat ist an einer Stützeinrichtung (22, 24) und/oder an der Querträgereinrichtung (30) gehalten;
- mindestens eine Aufnahme für ein Reinigungsaggregat ist an einer Stützeinrichtung (22, 24) und/oder an der Querträgereinrichtung (30) gehalten.

15. Fahrzeugbehandlungsanlage, umfassend mindestens eine Portalvorrichtung (10) nach einem der voranstehenden Ansprüche und mindestens ein Fahrzeugbehandlungsaggregat.

## Claims

1. Gantry device for a vehicle treatment system (14), comprising two support apparatuses (22, 24), which are arranged at a distance from one another, and a cross-member apparatus (30), which connects the support apparatuses (22, 24) to one another, it being possible for the support apparatuses (22, 24) to be installed via a respective installation region (38) on an installation surface (12) for the gantry device (10) and the support apparatuses being connected to the cross-member apparatus (30) at a connecting region (42) facing away from the installation region (38), at least one support apparatus (22, 24) having a first portion (48) and a second portion (50), the first portion (48) being connected to the cross-member apparatus (30) at the connecting region (42), and the second portion (50) comprising the installation region (38), as well as a hinge apparatus (56) which connects the first portion (48) to the second portion (50) and is arranged between the installation region (38) and the connecting region (42), **characterized in that** the second portion (50) is pivotable relative to the first portion (48) away from the other support apparatus (22, 24) about a pivot axis (58, 68).

2. Gantry device in accordance with claim 1, **characterized in that** the installation region (38) is arranged on an end side (36) of the support apparatuses (22, 24) facing away from the cross-member apparatus (30).

3. Gantry device in accordance with either claim 1 or claim 2, **characterized in that** the connecting region (42) is arranged on an end side (44) of the support apparatuses (22, 24) facing the cross-member apparatus (30).

4. Gantry device in accordance with any of the preceding claims, **characterized in that** at least one of the support apparatuses (22, 24) is immovably connected to the cross-member apparatus (30) at the connecting region (42) and/or **in that** the at least one support apparatus (22, 24) is designed so as to extend in a straight line in the constructed state.

5. Gantry device in accordance with any of the preceding claims, **characterized in that** a pivot angle between the first portion (48) and the second portion (50) is 90° or substantially 90° and/or **in that** the pivot axis (58, 68) is oriented transversely and in particular perpendicularly to the extension direction of the at least one support apparatus (22, 24) in its constructed state.

6. Gantry device in accordance with any of the preceding claims, **characterized in that** the pivot axis (58, 68) is oriented transversely and in particular perpendicularly to an extension direction of the cross-member apparatus (30).

7. Gantry device in accordance with any of the preceding claims, **characterized in that** the second portion (50) is oriented in parallel with the cross-member apparatus (30) in the transport state.

8. Gantry device in accordance with any of the preceding claims, **characterized in that** the pivot axis (58, 68) is arranged such that the second portion (50) projects as far as the other support apparatus (22, 24) or close to the other support apparatus (22, 24) in the transport state, preferably such that the second portion (50) abuts the other support apparatus (22, 24) in the transport state.

9. Gantry device in accordance with any of the preceding claims, **characterized in that** the pivot axis (58, 68) has a distance from the connecting region (42) that is approximately 15% to 30% of the extension of the support apparatus (22, 24) from the connecting region (42) to the installation region (38), preferably approximately 20% to 25%.

10. Gantry device in accordance with any of the preceding claims, **characterized in that** the pivot axis (58, 68) has a distance from the connecting region (42) that is approximately 25% to 45% of the extension of the support apparatus (22, 24) from the connecting region (42) to the installation region (38), preferably approximately 30% to 40%.

11. Gantry device in accordance with any of the preceding claims, **characterized in that** the support apparatus (22, 24) comprises two supports (32, 34) which are arranged at a distance from one another and each have a first support segment (52) and a second support segment (54), which are pivotable relative to one another about the pivot axis (58, 68), the first portion (48) comprising the first support segments (52) and the second portion (50) comprising the second support segments (54).

12. Gantry device in accordance with any of the preceding claims, **characterized in that** the two support apparatuses (22, 24) comprise in each case a first portion (48), a second portion (50), which can be pivoted thereto, and a hinge apparatus (56) having a pivot axis (58, 68), preferably at least one of the following applying:
- the pivot axes (58, 60) are oriented in parallel with one another;
- the pivot axes (58, 68) have different distances from each connecting region (42) of the support apparatuses (22, 24) with the cross-member apparatus (30).

13. Gantry device in accordance with claim 12, **characterized in that** the pivot axes are arranged such that the second portions (50) abut one another in the transport state.

14. Gantry device in accordance with any of the preceding claims, **characterized in that** at least one of the following applies:
- a support apparatus (22, 24) comprises an electrical apparatus (70) of the vehicle treatment system (14);
- a support apparatus comprises a hydraulic apparatus (62) of the vehicle treatment system (14);
- electrical, pneumatic and/or hydraulic lines are held on at least one support apparatus (22, 24) and/or on the cross-member apparatus (30);
- at least one drive motor (76, 78) for a travel drive of the gantry device (10) or for a cleaning unit is held on a support apparatus (22, 24) and/or on the cross-member apparatus (30);
- at least one receptacle for a cleaning unit is held on a support apparatus (22, 24) and/or on the cross-member apparatus (30).

15. Vehicle treatment system, comprising at least one gantry device (10) in accordance with any of the preceding claims and at least one vehicle treatment unit.

## Revendications

1. Dispositif de portique pour une installation de traitement automobile (14), comprenant deux montants (22, 24) qui sont disposés à une distance l'un par rapport à l'autre et une poutre transversale (30) reliant ensemble les deux montants (22, 24), les montants (22, 24) pouvant être installés par le biais d'une zone d'installation respective (38) sur une surface d'installation (12) pour le dispositif de portique (10) et étant reliés à la poutre transversale (30) au niveau d'une zone de liaison (42) opposée à la zone d'installation (38), au moins un montant (22, 24) présentant une première section (48) et une deuxième section (50), la première section (48) étant reliée au niveau de la zone de liaison (42) à la poutre transversale (30) et la deuxième section (50) comprenant la zone d'installation (38), ainsi qu'un mécanisme d'articulation (56) reliant la première section (48) à la deuxième section (50), disposé entre la zone d'installation (38) et la zone de liaison (42), **caractérisé en ce que** la deuxième section (50) est pivotante par rapport à la première section (48) autour d'un axe de pivotement (58, 68) en partant de l'autre montant respectif (22, 24).

2. Dispositif de portique selon la revendication 1, **caractérisé en ce que** la zone d'installation (38) est disposée au niveau d'une face terminale (36) des montants (22, 24) opposée à la poutre transversale (30).

3. Dispositif de portique selon la revendication 1 ou 2, **caractérisé en ce que** la zone de liaison (42) est disposée au niveau d'une face terminale (44) des montants (22, 24) qui est tournée vers la poutre transversale (30).

4. Dispositif de portique selon l'une des revendications précédentes, **caractérisé en ce qu'**au moins un des montants (22, 24) est relié de façon immobile avec la poutre transversale (30) au niveau de la zone de liaison (42) et/ou **en ce qu'**au moins un montant (22, 24) est conçu étendu de manière linéaire à l'état monté.

5. Dispositif de portique selon l'une des revendications précédentes, **caractérisé en ce qu'**un angle de pivotement entre la première section (48) et la deuxième section (50) atteint 90° ou sensiblement 90° et/ou **en ce que** l'axe de pivotement (58, 68) est orienté transversalement et notamment perpendiculairement à la direction d'extension du au moins un montant (22, 24) dans leur état monté.

6. Dispositif de portique selon l'une des revendications précédentes, **caractérisé en ce que** l'axe de pivotement (58, 68) est orienté transversalement et notamment perpendiculairement à une direction d'extension de la poutre transversale (30).

7. Dispositif de portique selon l'une des revendications précédentes, **caractérisé en ce que** la deuxième section (50) est orientée parallèlement à la poutre transversale (30) à l'état transporté.

8. Dispositif de portique selon l'une des revendications précédentes, **caractérisé en ce que** l'axe de pivotement (58, 68) est disposé de sorte que la deuxième section (50) soit saillante jusqu'à l'autre montant (22, 24) ou à proximité de l'autre montant (22, 24) à l'état transporté, de préférence **en ce que** la deuxième section (50) repose sur l'autre montant (22, 24) à l'état transporté.

9. Dispositif de portique selon l'une des revendications précédentes, **caractérisé en ce que** l'axe de pivotement (58, 68) présente une distance vis-à-vis de la zone de liaison (42) qui est d'environ 15 % à 30 % de l'extension du montant (22, 24) depuis la zone de liaison (42) à la zone d'installation (38), de préférence d'environ 20 % à 25 %.

10. Dispositif de portique selon l'une des revendications précédentes, **caractérisé en ce que** l'axe de pivotement (58, 68) présente une distance vis-à-vis de la zone de liaison (42) qui est d'environ 25 % à 45 % de l'extension du montant (22, 24) depuis la zone de liaison (42) à la zone d'installation (38), de préférence d'environ 30 % à 40 %.

11. Dispositif de portique selon l'une des revendications précédentes, **caractérisé en ce que** le montant (22, 24) comprend deux supports (32, 34) disposés à distance l'un de l'autre avec un premier segment de support respectif (52) et un deuxième segment de support respectif (54) qui sont pivotants l'un par rapport à l'autre autour de l'axe de pivotement (58, 68), la première section (48) comprenant les premiers segments de support (52) et la deuxième section (50) comprenant les deuxièmes segments de support (54).

12. Dispositif de portique selon l'une des revendications précédentes, **caractérisé en ce que** les deux montants (22, 24) comprennent une première section respective (48), une deuxième section respective (50) pivotante par rapport à celle-ci et un mécanisme d'articulation respectif (56) avec l'axe de pivotement (58, 68), au moins l'une des propositions suivantes étant de préférence valable :
- les axes de pivotement (58, 60) sont orientés parallèlement l'un à l'autre,
- les axes de pivotement (58, 68) présentent différentes distances depuis la zone de liaison respective (42) des montants (22, 24) avec la poutre transversale (30).

13. Dispositif de portique selon la revendication 12, **caractérisé en ce que** les axes de pivotement sont disposés de telle sorte que les deuxièmes sections (50) reposent l'une sur l'autre à l'état transporté.

14. Dispositif de portique selon l'une des revendications précédentes, **caractérisé en ce qu'**au moins l'une des propositions suivantes est valable :
- un montant (22, 24) comprend un système électrique (70) de l'installation de traitement automobile (14) ;
- un montant comprend un système hydraulique (62) de l'installation de traitement automobile (14) ;
- des lignes électriques, pneumatiques et/ou hydrauliques sont supportées au niveau d'au moins un montant (22, 24) et/ou au niveau de la poutre transversale (30) ;
- au moins un moteur d'entraînement (76, 78) pour un mécanisme d'entraînement du dispositif de portique (10) ou pour un groupe de nettoyage est supporté au niveau d'un montant (22, 24) et/ou au niveau de la poutre transversale (30) ;
- au moins une réception pour un groupe de nettoyage est supportée au niveau d'un montant (22, 24) et/ou au niveau de la poutre transversale (30).

15. Installation de traitement automobile, comprenant au moins un dispositif de portique (10) selon l'une des revendications précédentes et au moins un groupe de traitement automobile.
